Europäisches Patentamt

European Patent Office

Office européen des brevets

(19)

(11) Numéro de publication: **0 060 180**

**A1**

(12) ## DEMANDE DE BREVET EUROPEEN

(21) Numéro de dépôt: 82400342.0

(22) Date de dépôt: 26.02.82

(51) Int. Cl.³: **G 02 B 5/16**
G 02 B 5/172, H 01 B 13/00

(30) Priorité: 06.03.81 FR 8104537

(43) Date de publication de la demande:
15.09.82 Bulletin 82/37

(84) Etats contractants désignés:
BE CH DE GB IT LI

(71) Demandeur: LIGNES TELEGRAPHIQUES ET
TELEPHONIQUES L.T.T.
1, rue Charles Bourseul
F-78702 Conflans Ste Honorine(FR)

(72) Inventeur: Hulin, Jean-Pierre
THOMSON-CSF SCPI 173, bld Haussmann
F-75360 Paris Cedex 08(FR)

(72) Inventeur: Staath, Jean-Claude
THOMSON-CSF SCPI 173, bld Haussmann
F-75360 Paris Cedex 08(FR)

(72) Inventeur: de Vecchis, Michel
THOMSON-CSF SCPI 173, bld Haussmann
F-75360 Paris Cedex 08(FR)

(74) Mandataire: Jacquard, Philippe et al,
THOMSON-CSF SCPI 173, Bld Haussmann
F-75360 Paris Cedex 08(FR)

(54) Elément de câble et câble à fibres optiques, notamment susceptible de résister à des tractions et/ou à des pressions élevées, et son procédé de fabrication.

(57) L'invention concerne un élément de câble et un câble à fibres optiques, notamment susceptible de résister à des tractions et/ou à des pressions élevées et son procédé de fabrication.

Un tel élément de câble comporte une pluralité de fils (2) câblés hélicoïdalement ou à pas alterné de manière à former un ensemble rigide, les fils (2) présentant entre eux au moins un interstice (6) et au moins un fibre optique (3) disposée dans au moins un interstice (6) entre les fils (2).

Selon une variante, les fils sont câblés autour d'un noyau central plein (1) généralement métallique. Les fils peuvent être également métalliques de même qu'une enveloppe disposée autour de l'élément de câble. Un matériau thermoplastique ou une colle peut être mis en oeuvre pour assurer la solidarisation des fils (2) entre eux. Le procédé de fabrication consiste à câbler une pluralité de fils (2) de manière à former un ensemble rigide et à disposer au moins une fibre optique (3) dans au moins un interstice.

FIG_1

# ELEMENT DE CABLE ET CABLE A FIBRES OPTIQUES,
## NOTAMMENT SUSCEPTIBLE DE RESISTER A DES TRACTIONS ET/OU
## A DES PRESSIONS ELEVEES ET SON PROCEDE DE FABRICATION

La présente invention a pour objet un élément de câble et un câble à fibres optiques, notamment susceptible de résister à des tractions et/ou à des pressions élevées et son procédé de fabrication.

On connaît de l'art antérieur un élément de câble à fibres optiques où les fibres optiques sont disposées dans des rainures ou encoches, hélicoïdales ou à pas alterné, ménagées à la surface d'une structure cylindrique. La structure cylindrique se compose en général d'un porteur central entouré de matière plastique. La forme des encoches de même que leur état de surface sont des éléments importants de cette structure. Par exemple, le brevet français N° 2 419 524 déposé par la Demanderesse divulgue une structure cylindrique rainurée dont les rainures affectent un profil en V curviligne, la concavité des côtés étant dirigée vers l'extérieur de la rainure.

La présente invention concerne ainsi un élément de câble à fibres optiques présentant toutes les caractéristiques recherchées pour la structure cylindrique rainurée, mais qui présente une résistance accrue à la traction et/ou à la pression.

Un élément de câble à fibres optiques suivant l'invention comporte une pluralité de fils câblés hélicoïdalement ou à pas alterné de manière à former un ensemble rigide, lesdits fils présentant entre eux au moins un interstice, et au moins une fibre optique disposée librement dans au moins un interstice entre les éléments.

Selon un mode de réalisation de l'invention, les fils sont câblés autour d'un noyau central, de préférence métallique. Le noyau central peut être plein, ou bien être constitué par exemple par un toron.

Selon une variante, les fils et le noyau central sont réalisés dans le même matériau. L'enveloppe peut être également réalisée dans le même matériau.

Selon une variante, les interstices présents entre la partie interne des fils et le noyau sont remplis par un matériau thermoplastique ou une résine.

Selon une variante, le profil interne des fils correspond au profil extérieur du noyau.

Enfin, selon une autre variante, les fils sont disposés dans des rainures hélicoïdales ou à pas alterné prévues dans le noyau.

L'invention concerne également un procédé de fabrication d'un élément de câble tel que mentionné ci-dessus, et qui consiste à câbler hélicoïdalement ou à pas alterné une pluralité de fils de manière à former un ensemble rigide, et à disposer au moins une fibre optique dans au moins un interstice entre les fils.

Selon une variante, le câblage a lieu autour d'un noyau central et il comporte une étape préliminaire d'enduction dudit noyau ou desdits fils par une couche de matériau thermoplastique ou de résine. L'épaisseur de ladite couche est avantageusement déterminée de manière à compenser le volume des interstices internes entre les fils et le noyau central.

L'invention sera mieux comprise dans la description qui va suivre donnée à titre d'exemple non limitatif, en se reportant aux dessins en coupe ci-annexés et où :

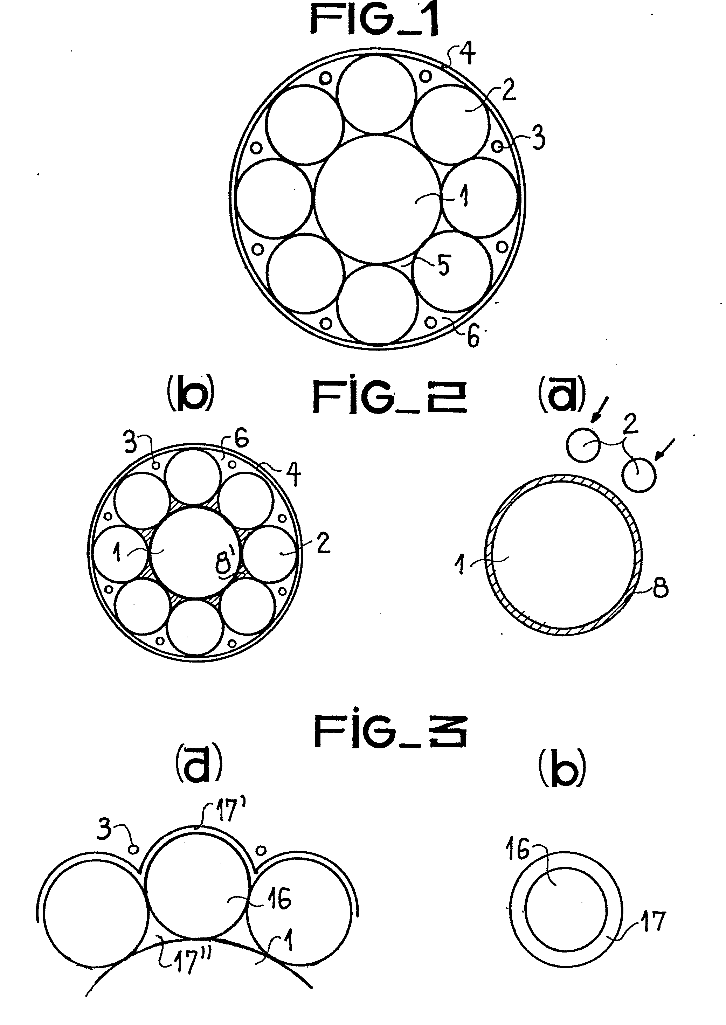

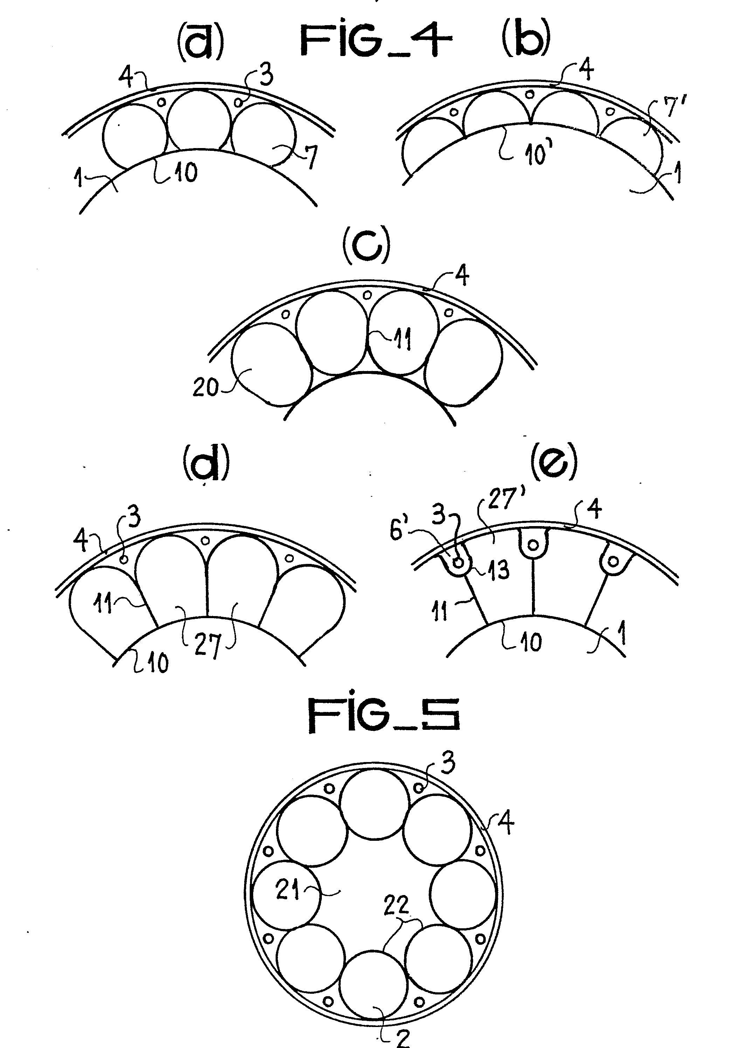

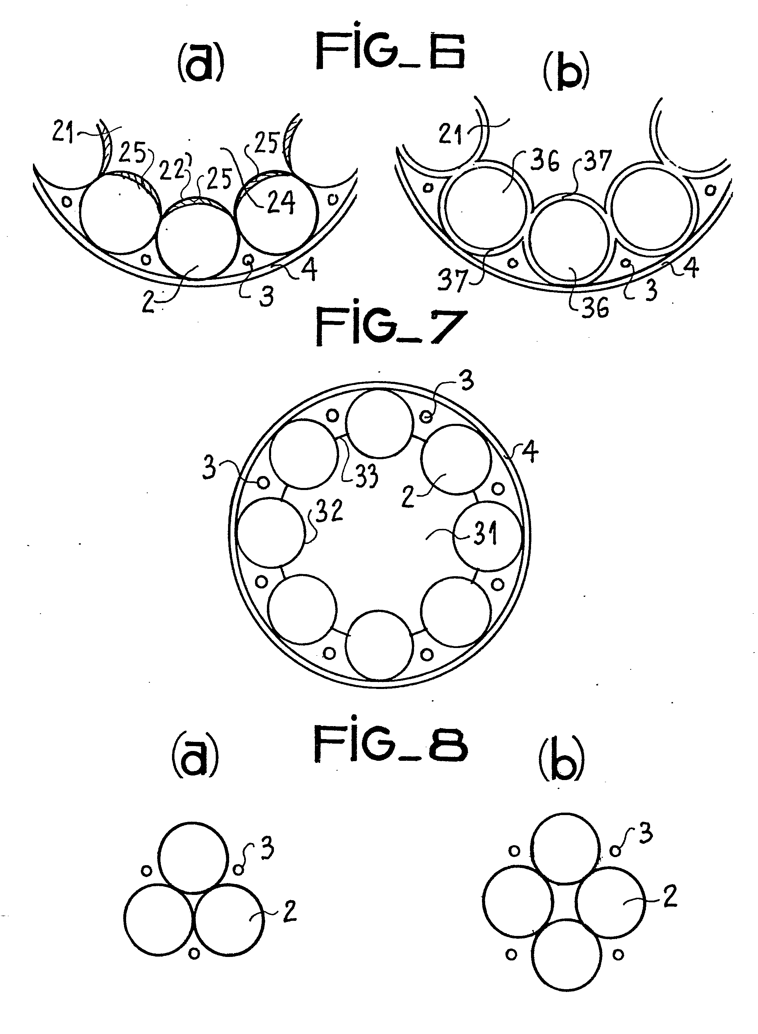

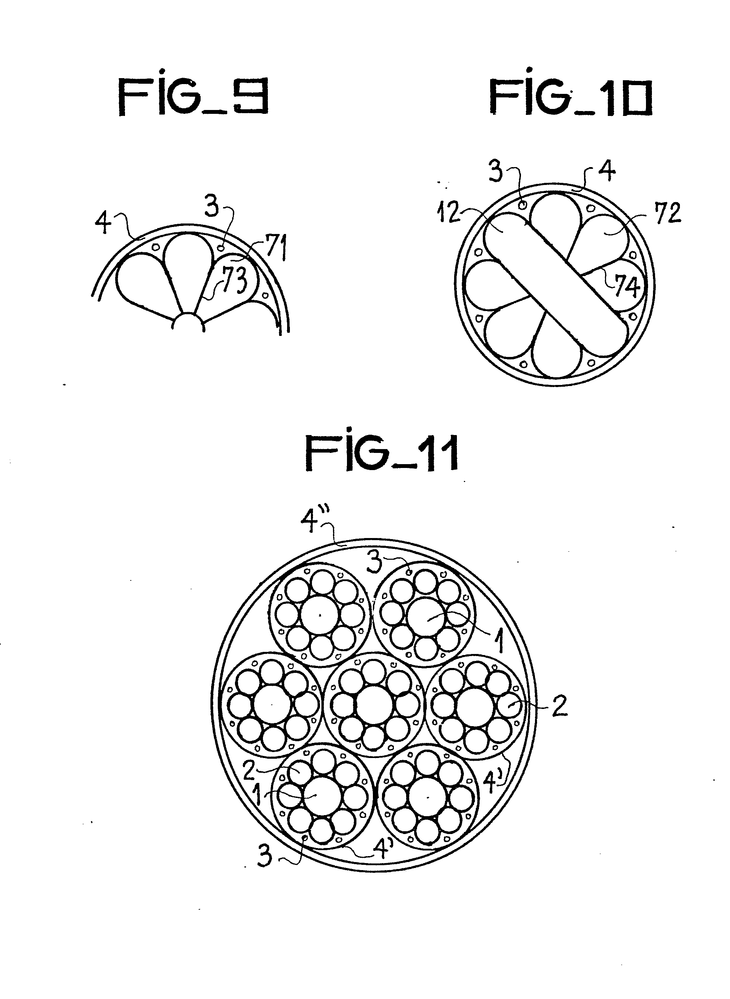

- la figure 1 représente un élément de câble selon l'invention;

- les figures $2_a$ et $2_b$ illustrent une variante de la figure 1 mettant en oeuvre une étape d'enduction d'un noyau central;

- les figures $3_a$ et $3_b$ représentent une variante de la figure 1 mettant en oeuvre une étape d'enduction des fils câblés;

- les figures $4_a$ à $4_e$ représentent des variantes de profil des fils câblés;

- les figures 5, $6_a$, $6_b$ et 7 représentent des variantes de l'invention mettant en oeuvre un noyau central rainuré;

- les figures $8_a$, $8_b$ et 9 représentent des variantes de l'invention ne présentant pas de noyau central;

- la figure 10 représente une variante de l'invention où un noyau central s'étend radialement jusqu'au diamètre extérieur de l'élément;

- la figure 11 représente un câble à fibres optiques mettant en oeuvre une pluralité d'éléments de câble suivant l'invention.

La figure 1 représente un noyau central 1 autour duquel sont câblés des fils 2, ici au nombre de 8. Le noyau central 1 peut être plein ou bien être constitué par exemple par un toron. Les fils 2 sont de forme cylindrique de révolution et sont câblés hélicoïdalement ou à pas alterné, chacun des fils étant tangent aux 2 fils adjacents ainsi qu'au noyau central 1. Des triangles curvilignes 5 subsistent ainsi entre deux fils et le noyau central, ainsi que des interstices externes 6 ouverts. Ces interstices 6 présentent en coupe la forme d'un V incurvé dont la concavité est dirigée vers l'extérieur. Ces interstices, dont la forme correspond à celle préconisée par le brevet français 2 419 524 précité, sont utilisés pour y disposer des fibres optiques 3. Ainsi, à la figure 1, on a représenté une fibre optique disposée dans chacun des interstices. Il est bien entendu, que pour réaliser un câble selon l'invention, il n'est pas nécessaire de déposer une fibre optique dans chacun des interstices. D'autre part, plusieurs fibres optiques peuvent être disposées dans un même interstice. Un élément de câble selon l'invention est avantageusement entouré par un rubanage ou un guipage et/ou une gaine et/ou une enveloppe 4.

Les figures $2_a$ et $2_b$ représentent une variante de la figure 1 où les triangles curvilignes 5 sont remplis par exemple d'un matériau thermoplastique et/ou d'une résine. Pour ce faire, le noyau central 1 est revêtu d'une couche 8 de matériau plastique ou de résine et les éléments 2 sont ensuite câblés, éventuellement après préchauffage de la couche 8. Lors du câblage, la couche 8 prend la forme représentée à la figure $2_b$ en 8' et vient remplir les interstices intérieurs fermés 5. On choisira l'épaisseur de la couche 8 de telle sorte que, après câblage, la quantité de matière qu'elle représente vienne remplir juste les triangles curvilignes 5. Une telle variante permet d'obtenir une structure mécaniquement plus cohérente étant donné que les fils câblés 3 sont maintenus en place par la couche 8' qui remplit les triangles curvilignes et évite ainsi un glissement autour du noyau central 1, notamment lors d'une détorsion de l'élément de câble.

Une autre variante est représentée aux figures $3_a$ et $3_b$ et correspond à un enrobage de fils 16 par une couche 17 de matériau thermoplastique èt/ou de colle. Après câblage, on obtient un élément représenté à la figure $3_b$ et dans lequel les triangles curvilignes 17" sont également remplis et où les interstices extérieurs sont définis par le raccordement géométrique des couches 17 correspondant à des fils 16 adjacents. Pour la définition des paramètres géométriques des encoches, il faut tenir compte du diamètre des fils 16 corrigé de la couche 17. Une immobilisation assez voisine des fils peut être obtenue par extrusion, autour des fils 16 après leur câblage, d'un matériau thermoplastique. Dans ce cas, l'immobilisation se fait par l'extérieur et il faut comme dans le cas précédent corriger les dimensions des encoches 6 de l'épaisseur de la couche 17'. Les triangles curvilignes 17" restent alors vides.

La figure $4_a$ représente des fils 7 câblés autour d'un noyau central 1. Chacun des fils présente une partie concave 10 dont le profil correspond au profil extérieur du noyau central 1. On obtient ainsi une meilleure surface de contact entre les fils 7 et le noyau central 1, ce qui correspond à une meilleure solidarisation mécanique de l'ensemble. Sur la figure $4_b$, les fils 7' voient leur partie concave 10' s'étendre jusqu'à faire disparaitre les interstices intérieurs.

La figure $4_c$ représente des fils 20 dont les parties latérales comportent des méplats 11. La figure $4_d$ représente une combinaison des deux solutions précédentes sous la forme de fils 27 pourvu d'une partie concave 10 ainsi que de méplats 11. La figure $4_e$ représente des fils 27' pourvus de méplats 11 et dont le profil a été modifié de telle sorte que, grâce à deux demi rainures ménagées dans chacun des fils 27', des interstices 6' au profil arrondi reçoivent les fibres optiques 3. Dans ce cas également, une partie concave 10 peut être prévue.

La figure 5 représente un noyau central 21 dont le pourtour est pourvu de rainures 22 hélicoïdales ou à pas alterné et qui se raccordent entre elles. Les fils 2 sont alors câblés dans ces rainures dans les mêmes conditions que dans le cas de la figure 1, à ceci près que les rainures 22 maintiennent en place les fils 2.

La figure 6$_a$ représente un noyau central 21 pourvu de rainures 22' dont le rayon est supérieur à celui des fils 2, les interstices correspondant 25 étant remplis par exemple par une résine et/ou un matériau thermoplastique. Ce remplissage des interstices 25 est réalisé par enduction préalable du noyau central 21.

La figure 6$_b$ représente une variante de la figure 6$_a$ où un tel remplissage est réalisé par enduction préalable de fils 36 par une couche 37 de manière thermoplastique et/ou de résine.

La figure 7 représente une variante des figures 5 et 6 où les rainures 32 ne se raccordent pas, mais présentent entre elles une portion étroite 33, ce qui fait que les interstices dans lesquels sont disposées les fibres optiques 3 présentent cette fois-ci un fond plat.

La figure 8$_a$ illustre une variante de l'invention où les fils 2 sont câblés directement entre eux pour former une tierce, sans mettre en oeuvre un noyau central. La figure 8$_b$ correspond à un câblage des fils 2 de manière à former une quarte.

La figure 9 représente une pluralité de fils 71 câblés entre eux sans noyau central et qui sont rendus mécaniquement solidaires grâce à la présence de méplats latéraux 73 qui se prolongent pratiquement jusqu'au centre de l'élément considéré.

La figure 10 représente une variante de la figure 9 où un fil 12 s'étend radialement d'un bord à l'autre de l'élément de câble et remplit ainsi à la fois la fonction mécanique d'un élément central et de deux fils. L'ensemble est câblé à l'aide de fils 72 présentant des méplats latéraux 74.

La figure 11 représente un câble formé d'une pluralité d'éléments de câble suivant l'invention, câblés ensemble chacun étant éventuellement pourvu d'un revêtement extérieur 4' tel qu'un guipage, un rubanage, ou une gaine mince extrudée. L'ensemble est alors entouré d'une gaine et/ou d'une enveloppe 4".

Etant donné que l'invention concerne notamment un élément de câble susceptible de résister à des tractions et/ou à des pressions élevées, tout en conservant un environnement correct de la fibre, on choisira dans ce cas le matériau constituant les fils et le matériau constituant le noyau central de telle sorte que l'ensemble noyau + fils ne flue pas lors de l'application des efforts de traction et/ou de pression élevés que le câble est susceptible de subir. On choisira ainsi par exemple des fils métalliques par exemple obtenus par extrusion et assemblés hélicoïdalement ou avec un pas alterné, le cas échéant autour d'un noyau central composé préférentiellement du même métal (massif ou toron par exemple).

Lorsque l'élément de câble est destiné à subir des variations importantes de température, on utilise préférentiellement le même matériau pour les fils, le noyau et l'enveloppe. Ce matériau peut être par exemple de l'Invar pour obtenir une très bonne stabilité.

La dimension des encoches, qui doit être imposée pour fixer la liberté des fibres optiques, permet de déterminer le rayon r des fils. Le nombre d'encoches souhaité détermine le rayon R du cercle sur lequel se trouvent les centres des fils, d'où l'on déduit le diamètre du noyau central.

Le procédé de fabrication d'un élément de câble selon l'invention consiste à câbler hélicoïdalement ou à pas alterné une pluralité de fils de manière à former un ensemble rigide. Le câblage peut avoir lieu autour d'un noyau central. Il peut dans ce cas comporter une étape préliminaire d'enduction du noyau ou de fils par une couche de matériau thermoplastique ou de résine, l'épaisseur de ladite couche étant préférentiellement choisie de manière à compenser le volume des interstices entre les fils et le noyau central.

Dans le cas de la mise en oeuvre d'un matériau thermoplastique autour du noyau ou autour des fils, celui-ci sera choisi de telle sorte que sa température de ramollissement soit supérieure à la

7

température maximum d'utilisation de l'élément de câble. L'assemblage des fils se fait alors à une température légèrement supérieure
à la température de ramollissement du matériau thermoplastique.

8

REVENDICATIONS

1. Elément de câble à fibres optiques, caractérisé en ce qu'il comporte une pluralité de fils (2, 7, 16, 20, 27, 27', 36, 71, 72) câblés hélicoïdalement ou à pas alterné de manière à former un ensemble rigide, lesdits fils présentant entre eux au moins un interstice (6) et au moins une fibre optique disposée librement dans au moins un interstice (6) entre les fils.

2. Elément de câble selon la revendication 1, caractérisé en ce que les fibres sont maintenues dans les interstices par un rubanage ou un guipage (4, 4').

3. Elément de câble selon l'une des revendications 1 ou 2, caractérisé en ce que les fils câblés sont entourés d'une enveloppe métallique et/ou d'une gaine (4, 4").

4. Elément de câble selon l'une des revendications 1 à 3, caractérisé en ce que les fils câblés sont métalliques.

5. Elément de câble selon l'une des revendications 1 à 4, caractérisé en ce que les faces latérales des fils (20, 27, 27', 71, 72) comportent des méplats (11, 73, 74).

6. Elément de câble selon l'une des revendications 1 à 5, caractérisé en ce que les fils (2, 16, 7, 7', 20, 27, 27') sont câblés autour d'un noyau central.

7. Elément de câble selon la revendication 6, caractérisé en ce que le noyau central (1, 21, 31) est métallique.

8. Elément de câble selon l'une des revendications 6 ou 7, caractérisé en ce que les fils, le noyau central et une enveloppe sont réalisés dans le même matériau.

9. Elément de câble selon l'une des revendications 6 à 8, caractérisé en ce que les interstices (5) présents entre la partie interne des fils et le noyau sont remplis par un matériau thermoplastique ou une résine.

10. Elément de câble selon l'une des revendications 5 à 9, caractérisé en ce que le profil interne des fils (2, 7, 7', 27, 27', 72) correspond au profil extérieur du noyau.

11. Elément de câble selon la revendication 10, caractérisé en ce que les fils (2) sont disposés dans des rainures (22) hélicoïdales ou à pas alterné prévues dans le noyau.

12. Câble caractérisé en ce qu'il comporte une pluralité d'éléments de câbles, selon l'une des revendications précédentes, câblés ensemble et entourés d'au moins une gaine et/ou une enveloppe (4").

13. Procédé de fabrication d'un élément de câble selon l'une des revendications précédentes, caractérisé en ce qu'il consiste à :

- câbler hélicoïdalement ou à pas alterné une pluralité de fils (2, 7, 16, 20, 27, 27', 36, 71, 72)de manière à former un ensemble rigide,

- disposer au moins une fibre optique (3) dans au moins un interstice (6) entre les fils.

14. Procédé selon la revendication 13, caractérisé en ce que le câblage a lieu autour d'un noyau central (1, 21, 31).

15. Procédé selon la revendication 14, caractérisé en ce qu'il comporte une étape préliminaire d'enduction dudit noyau ou desdits fils par une couche de matériau thermoplastique ou de résine, et en ce que l'épaisseur de ladite couche est préférentiellement choisie de manière à compenser le volume des interstices (5) entre les fils et le noyau central.

16. Procédé selon l'une des revendications 14 ou 15, caractérisé en ce que le noyau ou les fils sont enduits d'un matériau thermoplastique et en ce que la pose des fils a lieu à une température légèrement supérieure à la température de ramollissement dudit matériau.

# FIG_1

# FIG_2

(b)

(a)

# FIG_3

(a)

(b)

FIG_4

(a)

(b)

(c)

(d)

(e)

FIG_5

## FIG_6

(a)

(b)

21 25 25 25
22 24
2 3 4

21 36 37
37
36 3 4

## FIG_7

3
4
33
2
32
31

## FIG_8

(a)

(b)

3
2

3
2

## FIG_9

## FIG_10

## FIG_11

Office européen
des brevets

**RAPPORT DE RECHERCHE EUROPEENNE**

EP 82 40 0342

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | DE - A - 2 836 314 (SIEMENS) <br><br> * revendications 1,6,7; figure * <br><br> --- | 1,2,3, 6,9 | G 02 B 5/16 <br> G 02 B 5/172 <br> H 01 B 13/00 |
| A | GB - A - 2 051 398 (SUMITOMO) <br><br> * résumé; figures 3,4,5 * <br><br> --- | 1,2,3, 4,6 | |
| A | DE - A - 2 900 302 (FELTEN) <br><br> * revendications 1-6 * <br><br> --- | 1,3,4, 6 | |
| A | FR - A - 2 444 282 (CABLES LYON) <br><br> * revendications; figures 1,2 * <br><br> --- | 4,5,13 | DOMAINES TECHNIQUES RECHERCHES (Int. Cl. ³) |
| A | US - A - 4 154 049 (N.T.L.) <br><br> * revendications; figures 1,5 * <br><br> -------- | 6,7,13, 14 | G 02 B 5/16 <br> 5/172 <br> H 01 B |

Le présent rapport de recherche a été établi pour toutes les revendications

| Lieu de la recherche | Date d'achèvement de la recherche | Examinateur |
|---|---|---|
| La Haye | 17-06-1982 | PFÄHLER |